# DEMANDE DE BREVET EUROPEEN

(11) **EP 0 709 976 A1**
(43) Date de publication de la demande: **01.05.1996**
(21) Numéro de dépôt: 95402339.6
(22) Date de dépôt: 20.10.1995
(51) Int. Cl.: H04B 10/142, H04J 14/08

(54) **Réseau de transmission d'informations sous forme optique, à capteurs auto-générateurs associés à des multiplexeurs de cohérence**

(30) Priorité: 24.10.1994 FR 9412677
(71) Demandeur: FRANCE TELECOM, F-75015 Paris (FR)
(72) Inventeur: Hamel, André, F-22300 Lannion (FR); Goedgebuer, Jean-Pierre, F-25115 Pouilley-les-Vignes (FR); Porte, Henri, F-25770 Serre-les-Sapins (FR)
(74) Mandataire: Dubois-Chabert, Guy

(57) **Abrégé**

Ce réseau comprend une ligne optique (2), au moins une source lumineuse (4) de faible longueur de cohérence, dont la lumière est injectée dans la ligne optique, des capteurs auto-générateurs (12, 14, 16) reliés à des moyens de multiplexage de cohérence (6, 8, 10) qui sont montés sur la ligne optique et prévus pour multiplexer optiquement les signaux fournis par les capteurs, en codant ces signaux sous forme de retards optiques, et des moyens de démultiplexage de cohérence (20, 22, 24), pour le démultiplexage de ces signaux. Application aux industries automobile et aéronautique.

## Description

### DOMAINE TECHNIQUE

La présente invention concerne un réseau de transmission d'informations sous forme optique.

Elle s'applique notamment aux télémesures et aux réseaux de multicapteurs.

### ETAT DE LA TECHNIQUE ANTERIEURE

Les réseaux de multicapteurs sont utilisés de plus en plus dans l'industrie automobile, en domotique, en aéronautique, dans la construction navale et dans le contrôle de l'environnement en milieu hostile ou non hostile.

Leur mise en oeuvre pose bien souvent des problèmes de câblage et donc de poids, d'encombrement, d'entretien et de coût.

Ces réseaux sont reliés à des centrales de mesure où sont rassemblés divers organes de mesure et des organes de décision.

Il est connu d'effectuer le multiplexage d'un réseau de multicapteurs de type piézo-électrique ou électrodynamique par voie électrique, par exemple par multiplexage temporel des données électriques fournies par chacun des capteurs.

Le transport des données s'effectue alors par un câble électrique.

Toutefois une telle méthode exige un apport extérieur d'énergie pour alimenter les circuits électroniques qui mettent en forme les données, afin de permettre le multiplexage temporel de celles-ci.

Ceci est notamment le cas pour les capteurs piézo-électriques.

Leur impédance de sortie très élevée (de l'ordre de 50 MΩ à 100 MΩ) nécessite généralement des transformateurs d'impédance permettant de réduire cette impédance à 50 Ω, pour l'adapter aux circuits électroniques de multiplexage.

Ce problème n'existe pas pour les capteurs électrodynamiques dont l'impédance de sortie est très basse (de l'ordre de quelques ohms).

Dans ce dernier cas, l'apport d'énergie extérieur reste toutefois nécessaire pour assurer l'alimentation des circuits de multiplexage.

Un multiplexage de type électrique nécessite un certain nombre de câbles extérieurs, destinés à l'alimentation en énergie ou à la mise en place d'alimentations électriques individuelles pour chacun des capteurs du réseau.

Ceci est gênant lorsque l'on cherche à réaliser des réseaux de multicapteurs comportant un nombre réduit d'interconnexions et de câbles.

### EXPOSE DE L'INVENTION

La présente invention a pour but de remédier aux inconvénients précédents.

Elle a pour objet un réseau de transmission d'informations sous forme optique, caractérisé en ce qu'il comprend :
- une ligne optique,
- au moins une source lumineuse de faible longueur de cohérence, dont la lumière est injectée dans la ligne optique,
- une pluralité de capteurs auto-générateurs,
- une pluralité de moyens de multiplexage de cohérence qui sont directement reliés respectivement aux capteurs auto-générateurs, sont montés sur la ligne optique et ainsi reliés optiquement à la source lumineuse et sont prévus pour multiplexer optiquement les signaux fournis par les capteurs auto-générateurs en codant ces signaux sous forme de retards optiques différents les uns des autres et supérieurs à la longueur de cohérence de la source, et
- des moyens de démultiplexage de cohérence, qui sont prévus pour démultiplexer ces signaux et permettent de détecter les informations fournies par chacun des capteurs auto-générateurs.

Dans le réseau objet de la présente invention, les signaux de sortie d'un ensemble de capteurs auto-générateurs (c'est-à-dire ne nécessitant aucune source d'énergie extérieure) sont transformés et multiplexés en informations optiques capables d'être transportées par une ligne optique ou "bus optique", jusqu'à des moyens de démultiplexage constituant une centrale de mesure unique.

Cette dernière permet d'interroger à distance chacun des capteurs du réseau.

Les capteurs auto-générateurs sont largement utilisés comme capteurs de force, de pression, de vitesse ou d'accélération, du fait de leur fiabilité et de leur faible coût.

De plus, la possibilité de les miniaturiser, par exemple par les technologies de la micro-électronique sur silicium ou plus généralement sur un semiconducteur, les rend tout particulièrement intéressants dans les microsystèmes de mesure.

La présente invention permet d'associer sur un même bus optique des capteurs auto-générateurs de différents types, qui sont par exemple adaptés à des mesures de pression, de température, de vitesse, d'accélération, de force ou de composition chimique de gaz.

La présente invention permet également de tirer partie de l'optique intégrée sur le niobate de lithium ou sur un semiconducteur comme par exemple le silicium ou encore sur des matériaux électro-optiques comme certains polymères, pour effectuer la transduction de données optiques ou électriques engendrées par des capteurs auto-générateurs sous forme de données multiplexables optiquement sur une ligne optique, sans apport extérieur d'énergie .

Dans la présente invention, on associe des capteurs auto-générateurs à des multiplexeurs de cohérence directement alimentés par les signaux électriques fournis par ces capteurs.

Dans le réseau objet de la présente invention, l'un au moins des capteurs auto-générateur peut être un capteur de type piézo-électrique ou de type électro-dynamique.

Les capteurs piézo-électriques se comportent comme des générateurs de charges électriques tandis que les capteurs électro-dynamiques se comportent comme des générateurs de tension.

Les multiplexeurs de cohérence utilisés dans l'invention peuvent être des modulateurs intégrés qui introduisent des retards optiques supérieures à la longueur de cohérence de la source lumineuse du réseau.

Le fait que l'impédance d'entrée de ces modulateurs puisse être rendue très élevée permet de multiplexer optiquement, sans apport d'énergie extérieure, les données électriques fournies par les capteurs.

Il est à noter que, dans le cas de l'utilisation de capteurs piézo-électriques, la nécessité d'un transformateur d'impédance n'existe pas car l'impédance d'un modulateur intégré à électrodes capacitives peut être rendue très élevée (supérieure à 10 MΩ).

Il n'y a alors plus lieu d'effectuer une adaptation d'impédance entre de tels capteurs et les multiplexeurs correspondants.

Ceci conduit à une simplification significative du réseau puisque tout transformateur d'impédance peut être supprimé.

De plus, ceci permet de supprimer tout apport d'énergie extérieure, ce qui conduit à une suppression des circuits électriques d'alimentation.

L'avantage de l'invention par rapport à un multiplexage électrique réside dans le fait de s'affranchir de toute alimentation électrique extérieure et donc de réduire les problèmes de câblage.

Seule la source lumineuse est nécessaire pour l'ensemble du réseau objet de l'invention.

On notera que, dans certains environnements hostiles, la transmission des données par un bus optique permet de réduire les problèmes de compatibilité électro-magnétique.

La méthode de multiplexage de cohérence est connue pour la transmission de signaux ou pour la mise en réseau de capteurs optiques interférométriques.

A ce sujet, on se reportera au document (1) qui, comme les autres documents dont il est question par la suite, est mentionné à la fin de la présente description.

On connaît également par le document (2) des modulateurs de cohérence utilisant la technologie de l'optique intégrée.

La présente invention associe, de façon originale, la méthode de multiplexage de cohérence à l'utilisation de capteurs auto-générateurs par exemple de type électro-dynamique ou de type piézo-électrique.

En ce qui concerne la modulation de cohérence, on se reportera également aux documents (3) à (11).

Dans la présente invention, en tant que moyen de multiplexage de cohérence ou en tant que moyen de démultiplexage de cohérence, on peut utiliser tout moyen optique dont le fonctionnement se ramène à celui d'un filtre spectral accordable ou d'un interféromètre réglé sur un retard optique supérieur à la longueur de cohérence de la source lumineuse et tel qu'aucune modulation de l'intensité lumineuse de sortie n'apparaisse sous l'effet de l'accord du filtre ou de l'interféromètre.

Les moyens de multiplexage et les moyens de démultiplexage utilisés dans la présente invention peuvent par exemple être des interféromètres à deux ondes ou des interféromètres à ondes multiples, des boucles optiques, des coupleurs directifs ou des modulateurs électro-optiques ou accousto-optiques ou magnéto-optiques ou piézo-optiques ou élasto-optiques ou encore d'autres moyens faisant intervenir des effets électriques, acoustiques, magnétiques ou mécaniques pour induire et moduler des retards supérieurs à la longueur de cohérence de la source lumineuse ou pour induire un filtrage spectral des longueurs d'onde.

Dans la présente invention, les signaux provenant des capteurs auto-générateurs sont codés sous forme de retards optiques supérieurs à la longueur de cohérence L=λ/dλ de la source lumineuse (où λ représente la longueur d'onde de cette source et dλ représente la largeur spectrale de celle-ci).

Cette opération de codage est réalisée par chacun des multiplexeurs qui introduisent, sur la lumière qui les traverse, des retards optiques D différents les uns des autres mais tous supérieurs à la longueur de cohérence de la source.

Les trains d'onde lumineux émis par cette source sont ainsi mis en situation de non interférence puisque les retards optiques mis en jeu sont supérieurs à la longueur de cohérence de la source.

Dans la présente invention, les moyens de multiplexage de cohérence peuvent être montés en série ou en parallèle ou à la fois en série et en parallèle sur la ligne optique.

La source lumineuse utilisée peut fonctionner en régime continu (c'est-à-dire émettre une lumière d'intensité constante au cours du temps) ou fonctionner en régime impulsionnel (c'est-à-dire émettre une lumière sous forme d'impulsions lumineuses).

La lumière émise par cette source peut être modulée avant sont injection dans la ligne optique de façon que la porteuse optique soit également modulée par exemple en phase ou en longueur d'onde ou encore en polarisation.

Les moyens de démultiplexage de cohérence utilisés dans l'invention introduisent des retards optiques équivalents à ceux utilisés dans les moyens de multiplexage.

Ceci a pour effet de ne recombiner, à la sortie d'un moyen de démultiplexage, que les trains d'onde correspondant au capteur interrogé et ainsi de les mettre en situation d'interférence.

Ceci rend alors possible une détection directe par photodiode des données émises par le capteur considéré.

Dans la présente invention, au moins l'un des moyens de multiplexage de cohérence peut comprendre :
- un substrat constitué par un cristal électro-optique biréfringent,
- un guide optique formé sur ce substrat, et
- des électrodes destinées à recevoir les signaux électriques fournis par le capteur auto-générateur associé à ce moyen de multiplexage, ces électrodes étant formées par des peignes inter-digités qui introduisent un couplage entre les modes de propagation transverse électrique et transverse magnétique de la lumière se propageant dans le guide optique.

Au moins l'un des moyens de multiplexage de cohérence et le capteur auto-générateur qui lui est associé peuvent être intégrés dans un même composant.

Ce composant peut comprendre un interféromètre de Mach-Zehnder dont les bras sont dissymétriques de façon à introduire un retard optique supérieur à la longueur de cohérence de la source lumineuse, l'un des bras de l'interféromètre étant recouvert d'une couche apte à modifier le passage de la lumière dans le bras qu'elle recouvre.

Cette couche peut être faite d'un matériau dont les propriétés optiques sont modifiées par absorption de molécules d'un fluide.

En variante, cette couche peut être faite d'un matériau piézo-électrique.

### BREVE DESCRIPTION DES DESSINS

La présente invention sera mieux comprise à la lecture de la description d'exemples de réalisation donnés ci-après à titre purement indicatif et nullement limitatif, en faisant référence aux dessins annexés sur lesquels :
- la figure 1 est une vue schématique d'un mode de réalisation particulier du réseau objet de l'invention,
- la figure 2 est une vue schématique d'un multiplexeur de cohérence utilisable dans un réseau conforme à l'invention et adapté à la transduction directe de données électrique fournies par un capteur piézo-électrique sous forme de retards optiques supérieurs à la longueur de cohérence de la source lumineuse utilisée dans ce réseau,
- la figure 3 est une vue schématique d'un autre multiplexeur de cohérence utilisable dans un réseau conforme à l'invention pour la détection de gaz ou de liquides par exemple, et
- la figure 4 est une vue schématique et partielle d'un autre réseau conforme à l'invention, dans lequel des multiplexeurs de cohérence sont montés à la fois en série et en parallèle.

### EXPOSE DETAILLE DE MODES DE REALISATION PARTICULIER

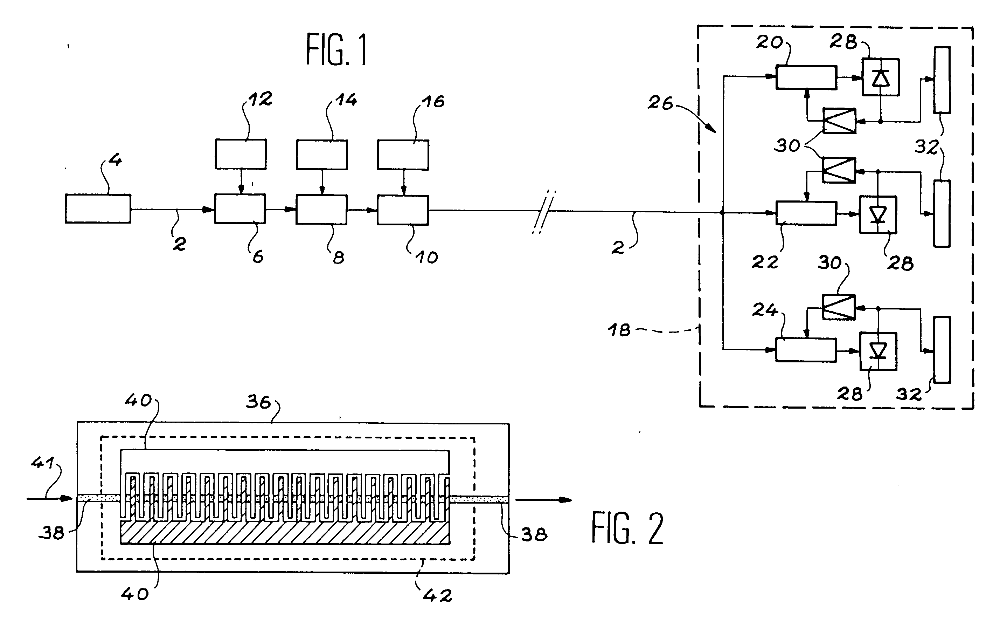

Le réseau conforme à l'invention, qui est schématiquement représenté sur la figure 1, comprend une ligne optique constituée par une fibre optique 2.

Ce réseau comprend aussi une source lumineuse 4 dont la lumière est injectée dans une extrémité de la fibre optique 2.

Cette source 4 a une faible longueur de cohérence et peut être par exemple une diode superluminescente ou une diode électroluminescente de longueur d'onde 850 mn et de longueur de cohérence 40 µm.

Cette diode peut fonctionner en régime continu ou impulsionnel.

Le réseau de la figure 1 comprend aussi des multiplexeurs de cohérence 6 ,8 et 10 qui sont insérés dans la ligne optique.

Ces multiplexeurs de cohérence sont montés en série sur cette ligne optique et sont respectivement reliés à des capteurs auto-générateurs 12, 14 et 16.

Les multiplexeurs de cohérence 6, 8 et 10 sont prévus pour convertir sous forme optique les signaux fournis par les capteurs, en réalisant une modulation de cohérence de ces signaux, et pour multiplexer les informations lumineuses ainsi obtenues.

A l'autre extrémité de la ligne optique 2 est montée une centrale de mesure 18 comprenant des moyens de démultiplexage des signaux.

La fibre optique 2 peut être monomode ou multimode suivant le type de technologie choisi pour la centrale de mesure 18.

Dans l'exemple représenté sur la figure 1, les capteurs auto-générateurs sont des capteurs piézo-électriques.

Chacun d'entre eux comprend par exemple une poutre de silicium sur laquelle est déposé un matériau piézo-électrique.

Les données électriques fournies par ces capteurs 12, 14 et 16 sont respectivement appliquées aux multiplexeurs 6, 8 et 10.

Chacun des capteurs fournit par exemple en sortie quelques pC avec un impédance de sortie de l'ordre 80 MΩ.

Les multiplexeurs 6, 8 et 10 dédoublent les trains d'ondes lumineuses émis par la source 4 et introduisent respectivement des retards optiques D1, D2 et D3 qui sont supérieures à la longueur de cohérence de cette source 4.

En traversant ces multiplexeurs, la lumière émise par la source subit ces retards optiques prédéterminés mais modulables par les signaux électriques engendrés par les capteurs.

Les données électriques issues de chacun des capteurs piézo-électriques 12, 14 et 16 sont directement codées sous forme de retards optiques.

Cette transduction électro-optique des données s'effectue directement, c'est-à-dire sans transformateur d'impédance, lorsque l'impédance d'entrée des multiplexeurs optiques est supérieure à l'impédance de sortie des capteurs.

Cette situation est différente de celle que l'on rencontre habituellement dans les réseaux de multicapteurs, dans lesquels les mesures et le multiplexage s'effectuent électriquement.

En effet, dans ce dernier cas, l'impédance de sortie des capteurs piézo-électriques peut être très élevée, par exemple égale à 50 MΩ.

Ceci nécessite habituellement, en sortie de chaque capteur, un transformateur d'impédance assurant une diminution de l'impédance de sortie pour la rendre compatible avec l'impédance d'entrée des circuits électroniques de mesure ou de multiplexage, qui est généralement de 50 Ω ou 75 Ω.

Ce transformateur d'impédance comporte généralement des amplificateurs opérationnels qui nécessitent une alimentation électrique extérieure.

Un avantage procuré par la présente invention est de permettre de réaliser un réseau de multicapteurs en évitant l'utilisation de tels transformateurs d'impédance et donc l'utilisation de toute source d'énergie extérieure électrique.

L'invention permet donc de tirer totalement partie du caractère auto-générateur des capteurs.

Les multiplexeurs 6, 8 et 10 sont par exemple des multiplexeurs électro-optiques intégrés sur un substrat de niobate de lithium, avec une impédance d'entrée de 150 MΩ et une tension de commande de l'ordre de 5 à 10 volts.

D'autres matériaux que le niobate de lithium sont utilisables, par exemple les polymères organiques, le silicium ou d'autres matériaux semiconducteurs.

Les multiplexeurs 6, 8 et 10 ont à la fois une fonction d'adaptation d'impédance et une fonction de multiplexage optique.

Les charges électriques (typiquement de l'ordre de quelques pC) fournies par chacun des capteurs 12, 14 et 16 sont codées sous forme d'une succession de retards optiques supérieurs à la longueur de cohérence de la source 4 de sorte qu'aucune modulation d'intensité lumineuse n'est détectable à la sortie de l'ensemble des multiplexeurs 6, 8 et 10.

La lumière parvient à la centrale de mesure 18 après avoir parcouru la fibre optique 2.

Cette centrale de mesure 18 comprend des moyens de démultiplexage 20, 22 et 24 qui reçoivent en entrée la lumière transmise par la fibre optique 2, par l'intermédiaire d'un coupleur optique 26 à une entrée et un nombre de sorties égal au nombre des moyens de démultiplexage.

Ces derniers sont respectivement associés aux moyens de multiplexage 6, 8 et 10 et sont constitués par des moyens qui appliquent des retards optiques et sont respectivement accordés sur les retards optiques correspondant aux capteurs 12, 14 et 16.

Ces moyens de démultiplexage peuvent être réalisés à partir des mêmes composants que ceux qui sont utilisés pour former les moyens de multiplexage 6, 8 et 10.

Dans les moyens de démultiplexage, les accords de retard optique sont effectués et contrôlés automatiquement au moyen de boucles de contre-réaction.

Plus précisément, chacun des moyens de démultiplexage ou démultiplexeurs 20, 22 et 24 est associé à un photodétecteur 28 qui reçoit en entrée la lumière issue du démultiplexeur correspondant.

Une boucle d'asservissement 30 utilise le signal détecté par ce photodétecteur 28 pour commander le démultiplexeur correspondant afin d'obtenir un signal maximum en sortie de ce photodétecteur.

Chaque photodétecteur 28 est également muni d'un moyen 32 d'affichage des données 32 détectées par ce photodétecteur.

Les conditions assurant le fonctionnement des moyens de multiplexage optique ou multiplexeurs 6, 8, 10 sont connues.

Elles sont définies par la valeur des retards optiques D1, D2 et D3 utilisées dans ces multiplexeurs.

Ces conditions sont d'ailleurs décrites dans le document (4).

Une séquence possible de retards optiques est donnée par la série D, 3D, 8D, ..., où D représente la valeur du retard optique le plus faible à introduire et dépend du taux de diaphonie que l'on souhaite obtenir entre les différents capteurs.

Le choix de D en fonction du taux de diaphonie est décrit dans le document (12).

A titre d'exemple, pour une diode électroluminescente de longueur d'onde 850 nm et de largeur spectrale 40 nm, on choisit un retard D égal à 84 µm pour un taux de diaphonie de -30 dB optique.

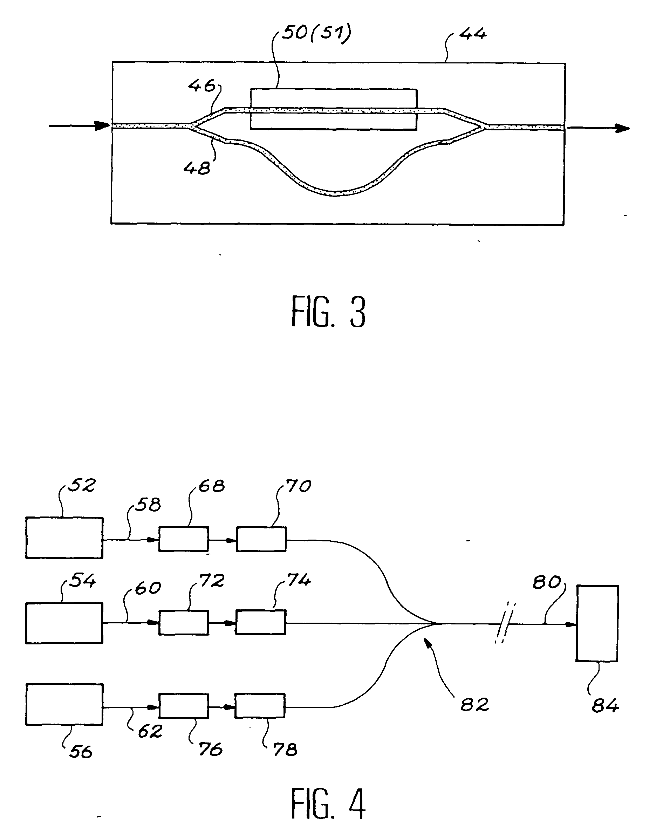

Un exemple de multiplexeur de cohérence utilisable dans la présente invention est schématiquement représenté sur la figure 2.

Ce multiplexeur de cohérence comprend un substrat 36 fait d'un cristal électro-optique biréfringent, par exemple un cristal de niobate de lithium.

Un guide optique 38 est formé par diffusion dans ce substrat 36.

Le multiplexeur de la figure 2 comprend aussi des électrodes qui sont constituées par des peignes interdigités 40.

Ces derniers introduisent un couplage entre le mode de propagation transverse électrique TE et le mode de propagation transverse magnétique TM de la lumière 41 qui se propage dans le guide 38.

Dans un exemple de réalisation, avec un substrat de niobate de lithium, la distance entre deux doigts des électrodes est de 4 µm et le guide 38 a une largeur de 5 mm.

Lorsque la lumière se propage dans ce guide, la biréfringence du cristal entre les modes TE et TM introduit un retard optique supérieur à la longueur de cohérence de la source dont la lumière traverse ce guide.

Ce retard optique est modulé par les charges électriques fournies par exemple par un micro-capteur piézo-électrique non représenté, dont les bornes sont connectées aux électrodes 40, ce qui permet de transformer directement le signal électrique de ce micro-capteur en un signal optique modulé en cohérence.

Le fait qu'aucun adaptateur ne soit nécessaire entre le micro-capteur piézo-électrique et le multiplexeur est rendu possible en utilisant une couche diélectrique isolante 42 qui limite les courants de fuite entre chacun des doigts des électrodes et entre le substrat et les électrodes.

En variante, on utilise une coupe de cristal permettant d'obtenir à la fois un retard optique supérieur à la longueur de cohérence de la source lumineuse et une isolation électrique importante entre les électrodes.

Généralement, pour le niobate de lithium, une coupe assurant la propagation de la lumière suivant l'axe cristallographique Z permet d'obtenir un modulateur de cohérence ayant une impédance d'entrée de plusieurs centaines de mégohms car les courants de fuite sont alors très faibles.

Une telle méthode peut également être associée à d'autres configurations de multiplexeurs de cohérence telles que celles qui sont décrites dans le document (13) ainsi que dans le document (2).

Les fonctions de multiplexage et de détection de pression ou de force ou, de façon générale, de toute grandeur physique ou chimique, peuvent être intégrées sur un même composant qui constitue alors à la fois un capteur de la grandeur considérée et un multiplexeur de cohérence (engendrant d'un retard optique supérieur à la longueur de cohérence de la source lumineuse).

Ceci est illustré par la figure 3 qui représente schématiquement un autre multiplexeur de cohérence utilisable dans la présente invention et adapté à la détection d'un fluide (gaz ou liquide).

Ce multiplexeur est réalisé au moyen d'un interféromètre de Mach-Zehnder 44 dont les bras 46 et 48 sont très dissymétriques de façon à introduire un retard optique supérieur à la longueur de cohérence de la source lumineuse (non représentée) avec laquelle il est utilisé.

Le bras 46 de l'interféromètre est recouvert d'une couche 50, par exemple une couche de polymère, dont les propriétés optiques sont modifiées par absorption des molécules du liquide ou du gaz.

On pourrait aussi utiliser une couche piézo-électrique 51 excitable par une contrainte mécanique.

Ceci a pour effet de modifier la propagation de la lumière dans ce bras de l'interféromètre et donc de moduler le retard optique induit par cet interféromètre.

Le composant de la figure 3 se comporte à la fois comme un détecteur de gaz ou de liquide ou de force et comme un multiplexeur de cohérence, ceci sans apport d'énergie électrique extérieure.

Un autre exemple de réalisation permettant d'obtenir de très importants retards optiques (jusqu'à 46 cm) à partir d'un guide en spirale formé sur du GaAs est décrit dans le document (14) auquel on se référera.

Pour l'ensemble des exemples de réalisation décrits, les divers types de capteurs peuvent être mis dans un ordre quelconque pour former un réseau de multicapteurs multiplexés optiquement.

La figure 4 représente de façon schématique un exemple de réalisation dans lequel les capteurs sont disposés suivant une architecture série-parallèle.

Dans le cas de la figure 4, des sources lumineuses 52, 54 et 56 de faible longueur de cohérence alimentent respectivement des lignes optiques élémentaires 58, 60 et 62.

Des multiplexeurs de cohérence 68 et 70 sont montés en série sur la ligne 58, d'autres multiplexeurs de cohérence 72, 74 sont montés en série sur la ligne 60 et d'autres multiplexeurs de cohérence 76 et 78 sont montés en série sur la ligne 62.

Chacun de ces multiplexeurs de cohérence est relié à un capteur auto-générateur non représenté.

Les trois lignes 58, 60 et 62 sont montées en parallèles et sont connectées à une ligne principale 80 par l'intermédiaire d'un coupleur optique 82.

La ligne optique principale 80 permet de relier les lignes optiques élémentaires 58, 60 et 62 à une centrale de mesure 84.

L'ensemble des signaux provenant des capteurs sont transformés, grâce aux multiplexeurs 68 à 78, en des signaux optiques modulés en cohérence et sont ensuite acheminés par la ligne optique principale 80 (bus optique) vers la centrale de mesure 84.

Cette centrale de mesure comprend des moyens de démultiplexage (non représentés), du genre de ceux dont il a été question précédemment, pour interroger chacun des capteurs auto-générateurs.

Les documents qui sont mentionnés dans la présente description sont les suivants :
(1) FR-A-2 608 869 (demande de brevet français n° 86 18078 du 23 décembre 1986)
(2) Demande de brevet français n° 8913105 du 6 octobre 1989 (voir aussi US-A-4866698)
(3) J.-P. Goedgebuer et al., Optica Acta, 29, 4, p.471-477, 1982
(4) J.L. Brooks et al., Journal of lightwave technology, LT-3, 5, octobre 1985, p.1062-1072
(5) US-A-4 860 279
(6) US-A-4 866 698
(7) US-A-4 882 775
(8) US-A-4 956 834
(9) US-A-4 699 513
(10) US-A-4 533 247
(11) FR-A-2 673 057 (demande de brevet français n°9102035 du 20 février 1991)
(12) J.-P. Goedgebuer et al., IEEE Journal of quantum electronics, 26, 5, 1990, p.1217-1226
(13) Mollier et al., Applied physics letters, 60, 3, 1992, p.274-276
(14) H.H. Haynes et al., Journal of lightwave technology, 11, 3, 1993, p.523-527

## Revendications

1. Réseau de transmission d'informations sous forme optique, caractérisé en ce qu'il comprend :
- une ligne optique (2; 58, 60, 62, 80),
- au moins une source lumineuse (4; 52, 54, 56) de faible longueur de cohérence, dont la lumière est injectée dans la ligne optique,
- une pluralité de capteurs auto-générateurs (12, 14, 16),
- une pluralité de moyens de multiplexage de cohérence (6, 8, 10; 68, 70, 72, 74, 76, 78) qui sont directement reliés respectivement aux capteurs auto-générateurs, sont montés sur la ligne optique et ainsi reliés optiquement à la source lumineuse et sont prévus pour multiplexer optiquement les signaux fournis par les capteurs auto-générateurs en codant ces signaux sous forme de retards optiques, différents les uns des autres et supérieurs à la longueur de cohérence de la source, et
- des moyens de démultiplexage de cohérence (20, 22, 24) qui sont prévus pour démultiplexer ces signaux et permettent de détecter les informations fournies par chacun des capteurs auto-générateurs.

2. Réseau selon la revendication 1, caractérisé en ce que les moyens de multiplexage de cohérence (6, 8, 10; 68, 70, 72, 74, 76, 78) sont montés en série ou en parallèle ou à la fois en série et en parallèle sur la ligne optique (2; 58, 60, 62, 80).

3. Réseau selon l'une quelconque des revendications 1 et 2, caractérisé en ce que la source lumineuse (4; 52, 54, 56) émet une lumière d'intensité constante au cours du temps ou une lumière sous forme d'impulsions lumineuses.

4. Réseau selon l'une quelconque des revendications 1 à 3, caractérisé en ce que la lumière émise par la source est modulée avant son injection dans la ligne optique.

5. Réseau selon l'une quelconque des revendications 1 à 4, caractérisé en ce qu'au moins l'un des capteurs auto-générateurs (12, 14, 16) est un capteur de type piézo-électrique ou de type électrodynamique.

6. Réseau selon l'une quelconque des revendications 1 à 4, caractérisé en ce qu'au moins l'un des moyens de multiplexage de cohérence comprend :
- un substrat (36) constitué par un cristal électro-optique biréfringent,
- un guide optique (38) formé sur ce substrat, et
- des électrodes (40) destinées à recevoir les signaux électriques fournis par le capteur auto-générateur associé à ce moyen de multiplexage, ces électrodes étant formées par des peignes inter-digités qui introduisent un couplage entre les modes de propagation transverse électrique et transverse magnétique de la lumière se propageant dans le guide optique.

7. Réseau selon l'une quelconque des revendications 1 à 4, caractérisé en ce qu'au moins l'un des moyens de multiplexage de cohérence et le capteur auto-générateur qui lui est associé sont intégrés dans un même composant.

8. Réseau selon la revendication 7, caractérisé en ce que le composant comprend un interféromètre de Mach-Zehnder (44) dont les bras (46, 48) sont dissymétriques de façon à introduire un retard optique supérieur à la longueur de cohérence de la source lumineuse, l'un (46) des bras de l'interféromètre étant recouvert d'une couche (50; 51) apte à modifier le passage de la lumière dans le bras qu'elle recouvre.

9. Réseau selon la revendication 8, caractérisé en ce que cette couche (50) est faite d'un matériau dont les propriétés optiques sont modifiées par absorption de molécules d'un fluide.

10. Réseau selon la revendication 8, caractérisé en ce que cette couche (51) est faite d'un matériau piézo-électrique.
